# EUROPEAN PATENT SPECIFICATION

(11) **EP 2 965 956 B1**
(45) Date of publication and mention of the grant of the patent: **27.02.2019**
(21) Application number: 14175912.6
(22) Date of filing: 07.07.2014
(51) Int. Cl.: B60S 1/08, B60R 11/04, G01N 21/45

(54) **Camera based rain sensor for a window pane**
Kamerabasierter Regensensor für eine Fensterscheibe
Capteur de pluie à base de caméra destiné à une vitre de fenêtre

(43) Date of publication of application: 13.01.2016
(73) Proprietor: Conti Temic microelectronic GmbH, 90411 Nürnberg (DE); Continental Automotive GmbH, 30165 Hannover (DE)
(72) Inventor: Ashrafi, Mina, 89075 Ulm (DE); Botusescu, Adrian, 300507 Timisoara (RO); Gheorghe, Lucian, 300440 Timisoara (RO); Krökel, Dieter, 88097 Eriskirch (DE); Pasarica, Mihai-Grigorian, 325700 Otelu-Rosu (RO); Resch, Michael, 89075 Ulm (DE)

(56) References cited:
- WO-A1-2014/108123
- DE-A1-102006 010 671
- DE-A1-102011 055 928
- DE-A1-102011 103 302
- US-A1- 2013 235 381

## Description

The invention relates to a device for detecting rain on a window pane, and a method for designing a device for detecting rain on a window pane.
Rain sensor systems integrated in camera systems are known, which are used for detecting wetness and precipitation on a wind shield. Rain sensor systems based on image processing use a lighting system that generates a double reflection on the wind shield. A first reflection comes from the inner side of the wind shield and the second reflection comes from the outer side of the wind shield. The outer reflection is effected by raindrops, which is identified through image processing. Light coming from a light source illuminates the wind shield in a specific angle. The reflected light from the inner and the outer layer of the wind shield points into an objective imager.
Usually, camera-based rain sensor systems are attached to an inner side of the wind shield using a bracket. Light that passes through the bracket to the windshield is usually guided through a light guide, e.g. a glass fiber or similar (see for example US-A-2013/0235381). On an exit side of the light guide, the surface is acting as a homogeneous light emitting surface.
The illumination with light in a visible wavelength range may disturb persons outside the vehicle, even if it conforms common recommended practice or guidelines. However, illumination in the visible wavelength range has the advantage that common driver assist cameras may provide the function of rain sensing or that the rain sensor may also be used as a driver assist camera.
An object of the invention may be seen to provide a rain sensor with a low degree of mechanical complexity, which in particular does not rely on the use of light guides and which comprises an as simple as possible setup.
This object is met by a rain sensor having the features of independent claim 1. Advantageous embodiments and further improvements may be gathered from the sub-claims and the following description.
A rain sensor is proposed, comprising a camera arrangeable behind a window pane, wherein the camera is focused onto a far range that lies in front of the window pane, a light source for generating at least one light beam directed towards the window pane, and a straylight covering means arranged between the light source and the window pane. The straylight covering means comprises at least one blind hole which has a funnel-like shape with a light introduction opening facing the light source and a light exiting opening at an opposite end facing to the window pane, wherein at least one of the light exiting opening and the light introduction opening is closed with a light emitting surface facing the window pane. The light source directs the at least one light beam through the straylight covering means towards the window pane such that at least one beam such that at least one reflected light beam impinges on the camera.

A camera preferably comprises an image sensor, e.g. a CCD or CMOS sensor, as well as an objective for focusing light on the image sensor.

The light source may include all types of known light sources, but preferably includes one or further light emitting diodes (led). These may provide punctual light or surface-like light.

Rain is detected by the camera due to a certain combination of illumination and reflection on the window pane. With the light source, at least one light beam is provided and directed to the window pane, such that at least one light beam is reflected on the outer layer of the window pane to the camera. However, the reflection characteristics change when rain drops are present on the outer layer. Hence, the images containing the reflections the outer layer of the window pane may be evaluated in order to determine whether rain drops are present.

A core aspect of the rain sensor according to the invention lies in the fact that the common light guides may completely be eliminated through the use of light guiding openings between the light source and the window pane, wherein the light guiding openings are realized by blind holes delimited by lateral walls surrounding a light axis, which block light in a lateral direction relative to the light axis.

The main advantage is the elimination of the light guides passing through a bracket or other component. The light emitting surface, which may preferably be positioned at a light introduction opening, provides a broad, even and harmonic light directed to the window pane.

Resultantly, a cost-effective solution to block from a light source to be seen from a lateral side of the vehicle is provided. In this solution, there is no specific requirement for a light guiding feature with limited angular distribution or a light guide.

In a preferred embodiment, the at least one blind hole is designed so as to at least partially comprise a funnel shape, wherein the light introduction opening is larger than the light exiting opening, wherein lateral walls between the light introduction section and the light exiting section are aligned in such a geometrical relationship to the light source, that they reflect all light beams, which are not directed to the light exiting opening, back to the light source. This ensures that light may only pass through the light exiting section with a direction that fits the intended direction required for the reflection on the inner and outer layer of the window pane to the imaging sensor. For this purpose, the lateral walls comprise angles that only allow light beams passing through the blind holes that have appropriate angles with regard to the window pane, while the remaining light beams are reflected back to the light introduction surface. How this is accomplished is discussed further below regarding a method for designing a rain sensor according to the invention.

In an advantageous embodiment, the straylight covering means is a separate straylight cover, which is attachable to another component of the rain sensor, such that it is held in a predetermined spatial relationship relative to the light source and the window pane. For example, the straylight cover may be attached to a bracket for holding the rain sensor.

In an advantageous embodiment, the rain sensor comprises a bracket, which is attachable to the window pane. The bracket comprises an attachment side, which faces to the window pane in an installed state. The light source is arranged at an opposite side to the attachment side and the bracket provides for the straylight covering means with the at least one blind hole being directly arranged in the bracket. The integration of the at least one blind hole into the bracket leads to an even more cost-effective solution, as a certain component that houses these or similar light guiding openings, i.e. the at least one blind hole, is not necessary.

In this regard it is noted that some features are explained referring to the window pane. As the bracket is designed for attachment to the window pane, it is clear that these features directly correspond to the design of the bracket, in particular surface sections of the bracket, with which the bracket rests against the window pane.

Further advantageously, the light emitting surface arranged on the light exiting opening comprises a light diffuser. Especially when using a plurality of light emitting means as a light source, this supports the provision of a broad light source providing a broad light pattern on the wind shield. The light diffuser may be a foil or any other means that is capable of spreading the light rays into a broad light beam with an even light distribution.

Further advantageously, the at least one blind hole comprises a plurality of adjacently arranged blind holes, in particular when a plurality of light sources is used.

The invention further relates to a method for designing a rain sensor as described above, which has the goal to provide the geometrical parameters for creating a light directing recess, i.e. at least one blind hole mentioned above in the straylight covering means. The method basically comprises a number of steps, which relate to the graphical creation of planes, intersecting lines, angles and other items.

In a first step, a first plane through the center of the light source is created, wherein the center of the light source is considered as light starting points. The first plane may extend through a plurality of light sources. The first plane has the orientation given by the necessary illumination angle and may intersect with an intersection point between the windshield and an optical axis of the camera. Light coming from this angle is reflected from the windshield into the image sensor.

For each light source a second, vertical plane is created. These second planes are generated by the z-axis of the coordinate system and each light source center (the light starting points). These second planes may intersect a common reflected vanishing point of the camera.

Resultantly, a number of second planes are created, which intersect the first plane, leading to a number of intersection running into the direction of the intersection between optical axis and windshield.

In a following step, as the intersection lines represent axes for cylinders with a predetermined radius, these cylinders may be brought into intersection with an exterior surface of a straylight covering means, such as a bracket or a separate straylight cover. Resultantly, a number of intersection ellipses as light starting points will occur in the straylight covering means, which correspond to the light introduction openings in the straylight covering means.

At the intersection of each of the second planes with the corresponding ellipses two first ellipsis intersecting points result. Onto these, two lines are arranged, which comprise a certain angle relative to the corresponding cylinder axis. Intersecting these two lines with an interior surface of the straylight covering means will result in two second points, through which a circle or in particular (in case the space between light sources does not allow creating a circle) an ellipse having the diameter or respectively the long axis between these two points, which correspond to the light exiting openings.

The volume having as boundaries the two ellipses and the two lines defines the opening into the straylight covering means. The sidewall between the introduction opening and the exiting opening will reflect the light back and will allow passing only the beams orientated in a certain angle, corresponding with the desired angle.

Other characteristics, advantages and potential applications of the present invention result from the following description of the exemplary embodiments illustrated in the figures. Furthermore, identical or similar objects are identified by the same reference symbols in the figures.
Fig. 1 shows a sectional view of a rain sensor.
Fig. 2 shows a top view of a rain sensor.
Fig. 3 shows a bottom view of a rain sensor.
Fig. 4 shows a light directing recess, i.e. a blind hole, in a detail view.
Figs. 5 to 13b show the method for designing a rain sensor step by step.

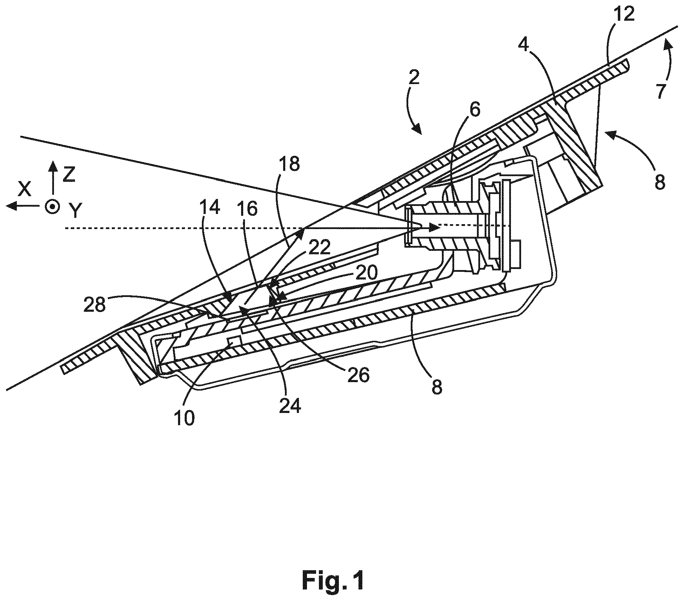

Fig. 1 shows a sectional view of a rain sensor 2 according to the invention. The rain sensor 2 exemplarily comprises a bracket 4, which carries an imaging sensor 6, a printed circuit board 8, which carries LEDs 10, which act as light source. The bracket 4 is adapted for being fixed to a windshield 12, i.e. a window pane, in particular of a vehicle.

Preferably, the image sensor 6 is realized as a camera, which is focused onto a far range that lies in front of the windshield 12. The camera may thereby also serve as a driver assist camera for other purposes.

The LEDs 10 emit light beams directed to the windshield 12, which then conduct a double reflection. A first reflection comes from an inner side of the windshield 12 and the second reflection comes from an outer side of the windshield 12.

The light intensity of the image acquired by means of the image sensor 6 from the outer reflection is affected by raindrops present on the windshield 12. Through the image sensor 6, both reflections are continuously acquired. By exemplarily evaluating the light intensity of the reflections, rain is detectable.

However, it is essential to prevent light from the LEDs 10 to be visible from a transverse direction outside the rain sensor 2, especially, if the rain sensor 2 is integrated into a vehicle. This is conducted through the integration of a straylight covering means 14, which exemplarily is located directly in the bracket 4.

In the exemplary embodiment shown in Fig. 1, the straylight covering means 14 comprises a light directing recess 16, which is a blind hole after installing a light emitting surface 26, which light directing recess is adapted for letting only light beams 18 with a certain direction, which allows a reflection directed to the image sensor 6, pass through.

The light directing recess 16 has a funnel-like shape with an introduction opening 20 facing to the LEDs 10 and an exiting opening 22, facing to the windshield 12. Here, the surface area of the introduction opening 20 is larger than the surface area of the exiting opening 22, thereby leading to the funnel-like shape.

In a plane defined by an x-axis, which is equal to the optical axis of the image sensor 6, and a z-axis, which is a vertical axis relative to the optical axis and a ground plane, the light directing recess 16 has a first delimiting wall 24, facing to the image sensor 6, and a second delimiting wall 26, facing to the LEDs 10. Both walls 24 and 26 are inclined relative to an optical axis of the LEDs 10, the printed circuit board 8 and the x-axis, such that light beams 18 from the LEDs 10 are reflected back to the LEDs 10, i.e. into the bracket 4, such that they are not visible from the outside. All light beams passing through the exiting opening 22 comprise an angle, which leads to a reflection from the windshield 12 to the image sensor 6.

For the purpose of providing a uniform pattern on the image acquired by the image sensor 6, a light emitting surface 26 is arranged on the light introduction opening 20 of the recess 16, which thereby constitutes a blind hole. Hence, light beams, which impinge on the light emitting surface 26, will be spread.

The number of light directing recesses 16 is substantially not limited and may depend on the number of LEDs 10. An arrangement of light directing recesses 16 may be adjusted to the LEDs 10, i.e. follow their geometrical arrangement and thereby considering a common vanishing point.

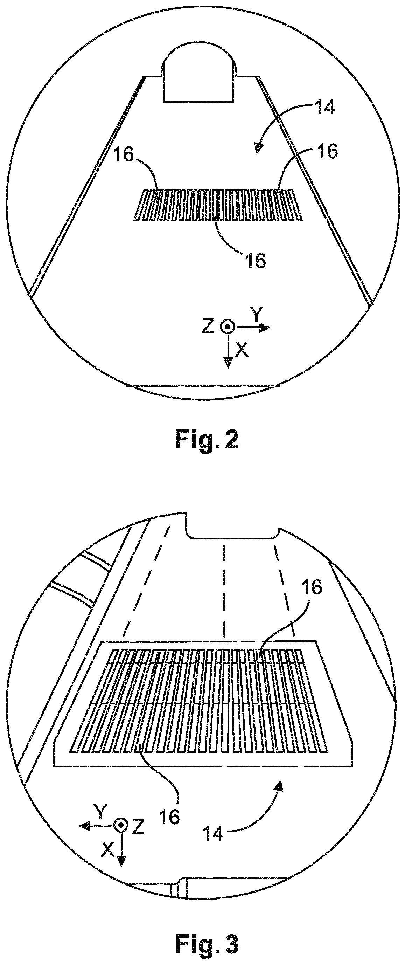

In a top view, i.e. through the windshield 12 to the light directing recesses 16 of the straylight covering means 14, Fig. 2 shows an arrangement of a plurality of recesses 14. In this plane, which may be a x-y-plane, the recesses are arranged so as to extend to a common vanishing point with regard to the image sensor 6, considering the reflection on the windshield. Consequently, recesses 16 located at outermost regions comprise a greater angle to the optical axis x than more inwardly located recesses 16.

This is further demonstrated in a bottom view in Fig. 3, i.e. a view onto the bottom side of the straylight covering means 14.

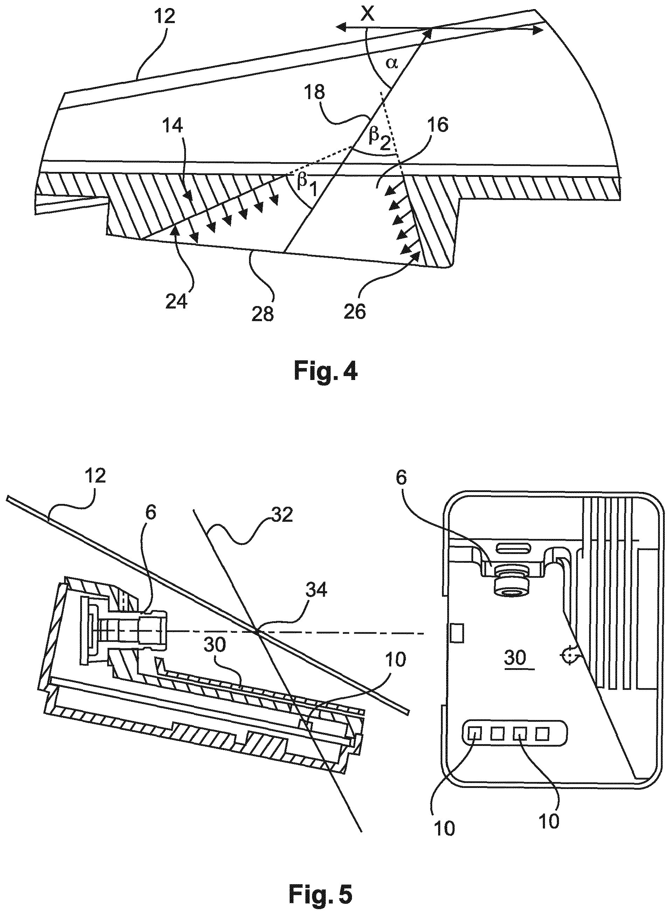

Fig. 4 demonstrates a light directing recess 16 in a more detailed view. The light beam 18 that is led through the light directing recess 16, comprises a certain angle α relative to the x-axis, such that a reflection will lead to a reflected light beam passing directly into the image sensor 6. The lateral walls 24 and 26 each comprise an angle β₁ and β₂ relative to such a light beam 18. Exemplarily, these angles are almost equal, leading to reflection of transverse light beams back to the LEDs 10.

However, if a light emitting surface 28 is arranged on the light introduction opening 20, light reflected from the lateral surfaces 24 and 26 impinges the light emitting surface 28 and leads to a further harmonic, diffuse reflection of light.

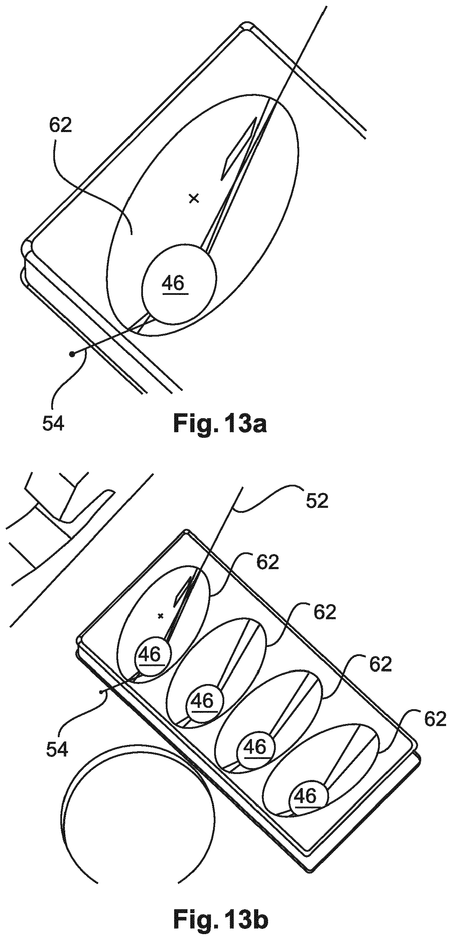

The design of such a light directing recess may be conducted through a design method, which is set forth in the following. In the accompanying drawings, i.e. Figs. 5 to 13b a separate straylight cover 30 is shown. However, as set forth above, the basic principles may also be applied to the straylight covering means integrated into the bracket.

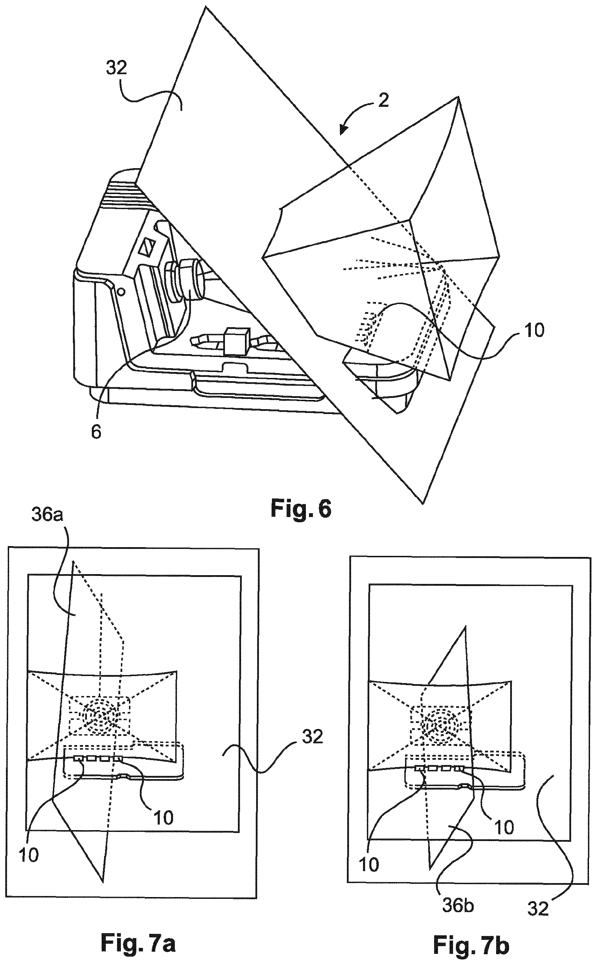

In order to obtain a required illumination angle a first plane 32, as depicted in Figs. 5 and 6, is created through the center of the LEDs 10, which are the light starting points. The first plane 32 has the orientation given by an intersection point 34 between the optical axis x and the windshield 12. Hence, the first plane 32 has an angle that allows reflection of light beams emitted by the LEDs 10 at the windshield into the image sensor 6.

As shown in Figs. 7a and 7b, for each of the LEDs 10 a second, vertical plane 36a, 36b is created. In Fig. 7a a rightmost plane 36a is shown, while Fig. 7b shows a leftmost plane 36b. All of the planes extend from the center of the respective LEDs 10 in a z-direction through the first plane 32, wherein they are angled so to extend through a common vanishing point given by the camera 6.

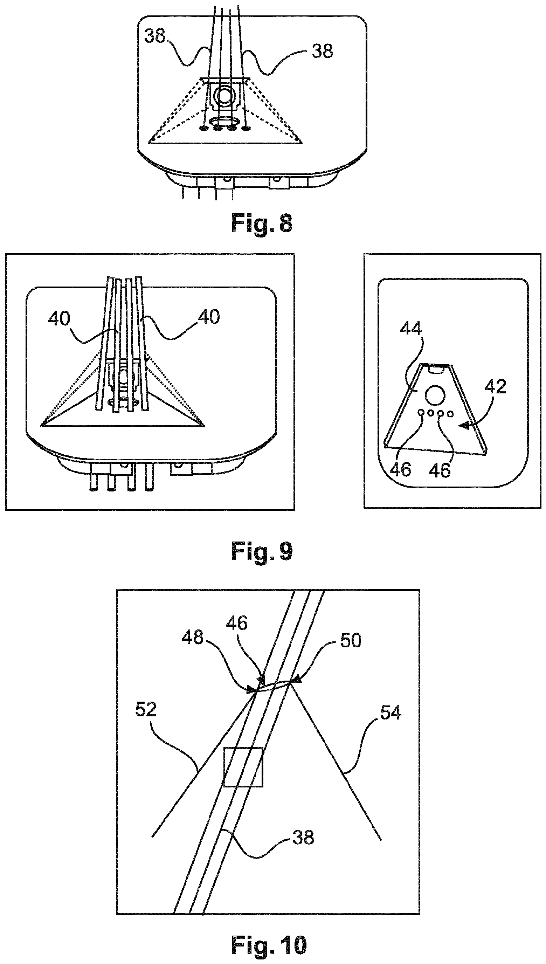

As shown in Fig. 8, the second planes 36a, 36b intersect with the first plane 32 and lead to four intersection lines 38.

These may be considered as longitudinal axes for longish cylinders 40 having a predetermined radius, such that a number of adjacent cylinders 40 with a common vanishing point result, as depicted in Fig. 9.

The cylinders 40 are intersected with an exterior surface 42 of a straylight covering means 44, such as a certain area of the bracket 4. Through the intersection, four ellipses 46 will result.

At the intersection of each of the four second planes 36a, 36b with the corresponding ellipses 46 two first intersecting points 48 and 50 result. This is shown in Fig. 10.

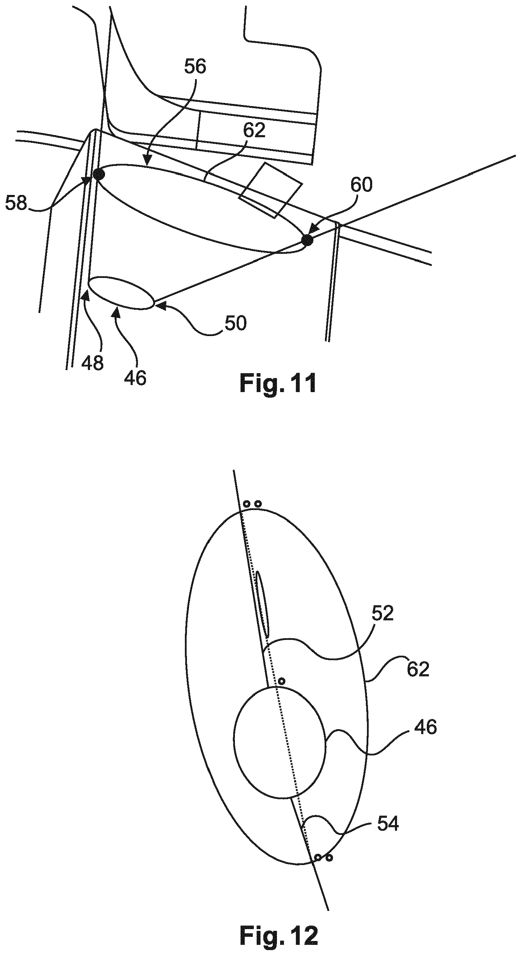

Onto these points 48 and 50, two auxiliary lines 52 and 54 are arranged, which comprise a certain angle relative with the respective cylinder axis. Intersecting the two lines 52 and 54 with an interior surface 56 of the straylight covering means will result in two second points 58 and 60, as visible in Figs. 11, 12, 13a and 13b.

Finally, through these two points an ellipsis 62 having a long axis between these two points 58 and 60 is created.

Resultantly, the rain sensor having the above mentioned, advantageous characteristics is provided.

## Claims

1. Rain sensor (2), comprising:
- a camera (6) arrangeable behind a window pane (12), wherein the camera (6) is focused onto a far range that lies in front of the window pane (12),
- a light source (10) for generating at least one light beam directed towards the window pane (12), and
- a straylight covering means arranged between the light source (10) and the window pane (12), wherein the light source (10) directs the at least one light beam through the straylight covering means towards the window pane (12) such that at least one reflected light beam impinges on the camera (6),
**characterized in that** the straylight covering means comprises at least one blind hole (16) which has a funnel-like shape with a light introduction opening (20) facing the light source (10) and a light exiting opening (22) at an opposite end facing to the window pane (12), wherein at least one of the light exiting opening (22) and the light introduction opening (20) is closed with a light emitting surface (28).

2. Rain sensor (2) according to claim 1,
wherein the at least one blind hole (16) is designed so as to at least partially comprise a funnel shape,
wherein the light introduction opening (20) is larger than the light exiting opening (22),
wherein lateral walls between the light introduction opening (20) and the light exiting opening (22) are aligned in such a geometrical relationship to the light source (10), that they reflect all light beams, which are not directed to the light exiting opening (22), back into the direction of the light source (10).

3. Rain sensor (2) according to claim 1 or 2,
wherein the straylight covering means is a separate straylight cover, which is attachable to another component of the rain sensor, such that it is held in a predetermined spatial relationship relative to the light source and the window pane.

4. Rain sensor (2) according to any of the previous claims,
further comprising a bracket (4), which is attachable to the window pane (12),
wherein the bracket (4) comprises an attachment side, which faces to the window pane (12) in an installed state,
wherein the light source (10) is arranged at an opposite side to the attachment side, and
wherein the bracket (4) provides for the straylight covering means with the at least one blind hole (16) being directly arranged in the bracket (4).

5. Rain sensor (2) according to any of the previous claims,
wherein the light emitting surface (28) comprises a light diffuser.

6. Rain sensor (2) according to any of the previous claims,
wherein the at least one blind hole (16) comprises a plurality of adjacently arranged blind holes (16).

7. Method for designing a rain sensor (2) according to any of the claims 1 to 6, the method comprising the steps of:
- creating a first plane (32) through the center of the light source (10), which first plane (32) intersects with an intersection point (34) between the window pane (12) and an optical axis (x) of the camera,
- for each light source (10) a second, vertical plane (36a, 36b) is created intersecting a common reflected vanishing point of the camera (6),
- creating a cylinder (40) for each intersection line (38) between the first plane (32) and the second planes (36a, 36b),
- creating an intersection ellipsis (46) for each cylinder (40) as a light exiting point,
- creating two lines (52, 54) starting at the intersection of each of the second planes (36a, 36b) with the corresponding ellipses (46), the lines (52, 54) aligned to the common reflected vanishing point, and
- intersecting the lines (52, 54) with an interior surface (56) of the straylight covering means and creating an ellipsis (62) having the long axis between the intersections (58, 60) with the interior surface (56), which ellipsis (62) corresponds to the light introduction opening (20).

## Patentansprüche

1. Regensensor (2), umfassend:
- eine Kamera (6), die hinter einer Fensterscheibe (12) anordenbar ist, wobei die Kamera (6) auf einen Fernbereich fokussiert ist, der vor der Fensterscheibe (12) liegt,
- eine Lichtquelle (10) zum Erzeugen wenigstens eines Lichtstrahls, der hin zu der Fensterscheibe (12) gerichtet ist, und
- ein Streulichtabdeckmittel, das zwischen der Lichtquelle (10) und der Fensterscheibe (12) angeordnet ist, wobei
die Lichtquelle (10) den wenigstens einen Lichtstrahl durch das Streulichtabdeckmittel hindurch derart hin zu der Fensterscheibe (12) richtet, dass wenigstens ein reflektierter Lichtstrahl auf die Kamera (6) trifft,
**dadurch gekennzeichnet, dass**
das Streulichtabdeckmittel wenigstens ein Blindloch (16) umfasst, das eine trichterartige Form mit einer der Lichtquelle (10) zugewandten Lichteinleitöffnung (20) und einer Lichtaustrittsöffnung (22) an einem der Fensterscheibe (12) zugewandten gegenüberliegenden Ende aufweist, wobei wenigstens eine aus der Lichtaustrittsöffnung (22) und der Lichteinleitöffnung (20) mit einer lichtemittierenden Fläche (28) verschlossen ist.

2. Regensensor (2) nach Anspruch 1,
wobei das wenigstens eine Blindloch (16) so konstruiert ist, dass es wenigstens teilweise eine Trichterform umfasst,
wobei die Lichteinleitöffnung (20) größer ist als die Lichtaustrittsöffnung (22),
wobei Seitenwände zwischen der Lichteinleitöffnung (20) und der Lichtaustrittsöffnung (22) in einer derartigen geometrischen Beziehung mit der Lichtquelle (10) ausgerichtet sind, dass sie alle Lichtstrahlen, die nicht auf die Lichtaustrittsöffnung (22) gerichtet sind, zurück in die Richtung der Lichtquelle (10) reflektieren.

3. Regensensor (2) nach Anspruch 1 oder 2,
wobei das Streulichtabdeckmittel eine separate Streulichtabdeckung ist, die an einem anderen Bauteil des Regensensors anbringbar ist, derart dass sie in einer vorgegebenen räumlichen Beziehung bezogen auf die Lichtquelle und die Fensterscheibe gehalten wird.

4. Regensensor (2) nach einem der vorangehenden Ansprüche,
der ferner eine Halterung (4) umfasst, die an der Fensterscheibe (12) anbringbar ist,
wobei die Halterung (4) eine Befestigungsseite umfasst, die in einem angebauten Zustand der Fensterscheibe (12) zugewandt ist,
wobei die Lichtquelle (10) an einer der Befestigungsseite gegenüberliegenden Seite angeordnet ist und
wobei die Halterung (4) ermöglicht, dass das Streulichtabdeckmittel mit dem wenigstens einen Blindloch (16) direkt in der Halterung (4) angeordnet ist.

5. Regensensor (2) nach einem der vorangehenden Ansprüche,
wobei die lichtemittierende Fläche (28) einen Lichtdiffusor umfasst.

6. Regensensor (2) nach einem der vorangehenden Ansprüche,
wobei das wenigstens eine Blindloch (16) eine Mehrzahl von benachbart angeordneten Blindlöchern (16) umfasst.

7. Verfahren zum Konstruieren eines Regensensors (2) nach einem der Ansprüche 1 bis 6, wobei das Verfahren folgende Schritte umfasst:
- Erzeugen einer ersten Ebene (32) durch den Mittelpunkt der Lichtquelle (10) hindurch, wobei die erste Ebene (32) sich mit einem Schnittpunkt (34) zwischen der Fensterscheibe (12) und einer optischen Achse (x) der Kamera schneidet,
- für jede Lichtquelle (10) wird eine zweite, vertikale Ebene (36a, 36b) erzeugt, die einen gemeinsamen reflektierten Fluchtpunkt der Kamera (6) schneidet,
- Erzeugen eines Zylinders (40) für jede Schnittlinie (38) zwischen der ersten Ebene (32) und den zweiten Ebenen (36a, 36b),
- Erzeugen einer Schnittellipse (46) für jeden Zylinder (40) als einen Lichtaustrittspunkt,
- Erzeugen von zwei Linien (52, 54), die am Schnittpunkt jeder der zweiten Ebenen (36a, 36b) mit den entsprechenden Ellipsen (46) beginnen, wobei die Linien (52, 54) mit dem gemeinsamen reflektierten Fluchtpunkt ausgerichtet sind, und
- Schneiden der Linien (52, 54) mit einer Innenfläche (56) des Streulichtabdeckmittels und Erzeugen eine Ellipse (62), welche die lange Achse zwischen den Schnittpunkten (58, 60) mit der Innenfläche (56) aufweist, wobei die Ellipse (62) der Lichteinleitöffnung (20) entspricht.

## Revendications

1. Capteur de pluie (2), comprenant :
- une caméra (6) pouvant être disposée derrière une vitre de fenêtre (12), la caméra (6) étant focalisée sur une zone éloignée se trouvant devant la vitre de fenêtre (12),
- une source lumineuse (10) pour générer au moins un rayon lumineux dirigé vers la vitre de fenêtre (12) et
- un moyen de couverture de lumière parasite disposé entre la source lumineuse (10) et la vitre de fenêtre (12),
la source lumineuse (10) dirigeant l'au moins un rayon lumineux à travers le moyen de couverture de lumière parasite vers la vitre de fenêtre (12) de telle sorte qu'au moins un rayon lumineux réfléchi frappe la caméra (6),
**caractérisé en ce que**
le moyen de couverture de lumière parasite comprend au moins un trou borgne (16) en forme d'entonnoir avec une ouverture d'introduction de lumière (20) faisant face à la source lumineuse (10) et une ouverture de sortie de lumière (22) à une extrémité opposée faisant face à la vitre de fenêtre (12), au moins une des ouvertures parmi l'ouverture de sortie de lumière (22) et l'ouverture d'introduction de lumière (20) étant fermée par une surface émettrice de lumière (28).

2. Capteur de pluie (2) selon la revendication 1,
l'au moins un trou borgne (16) étant conçu de sorte à présenter au moins partiellement une forme d'entonnoir,
l'ouverture d'introduction dans de lumière (20) étant plus grande que l'ouverture de sortie de lumière (22),
des parois latérales entre l'ouverture d'introduction de lumière (20) et l'ouverture de sortie de lumière (22) étant alignées avec un rapport géométrique à la source lumineuse (10) tel qu'elles renvoient dans la direction de la source lumineuse (10) tous les rayons lumineux qui ne sont pas dirigés vers l'ouverture de sortie de lumière (22) .

3. Capteur de pluie (2) selon la revendication 1 ou 2,
le moyen de couverture de lumière parasite étant une protection de lumière parasite séparée, laquelle peut être attachée à un autre composant du capteur de pluie, de telle sorte que celui-ci est maintenu dans un rapport spatial prédéterminé relativement à la source lumineuse et à la vitre de fenêtre.

4. Capteur de pluie (2) selon l'une quelconque des revendications précédentes,
comprenant en outre un support (4), lequel peut être attaché à la vitre de fenêtre (12),
le support (4) comprenant un côté de fixation, lequel fait face à la vitre de fenêtre (12) dans un état installé,
la source lumineuse (10) étant disposée sur un côté opposé au côté de fixation, et
le support (4) fournissant l'au moins un trou borgne (16) au moyen de couverture de lumière parasite par le fait que le susdit au moins un trou borgne (16) est directement disposé dans le support (4).

5. Capteur de pluie (2) selon l'une quelconque des revendications précédentes,
la surface émettrice de lumière (28) comprenant un diffuseur de lumière.

6. Capteur de pluie (2) selon l'une quelconque des revendications précédentes,
l'au moins un trou borgne (16) comprenant une pluralité de trous borgnes (16) disposés de façon adjacente les uns aux autres.

7. Procédé pour concevoir un capteur de pluie (2) selon l'une quelconque des revendications 1 à 6, le procédé comprenant les étapes de :
- créer un premier plan (32) à travers le centre de la source de lumière (10), lequel premier plan (32) intersecte un point d'intersection (34) entre la vitre de fenêtre (12) et un axe optique (x) de la caméra,
- pour chaque source lumineuse (10), un deuxième plan vertical (36a, 36b) est créé, intersectant un point de fuite réfléchi commun de la caméra (6),
- créer un cylindre (40) pour chaque ligne d'intersection (38) entre le premier plan (32) et les deuxièmes plans (36a, 36b),
- créer une ellipse d'intersection (46) pour chaque cylindre (40) comme un point de sortie de lumière,
- créer deux lignes (52, 54) commençant à l'intersection de chacun des deuxièmes plans (36a, 36b) avec les ellipses correspondantes (46), les lignes (52, 54) étant alignées sur le point de fuite réfléchi commun, et
- intersecter les lignes (52, 54) avec une surface intérieure (56) du moyen de couverture de lumière parasite et créer une ellipse (62) ayant le grand axe entre les intersections (58, 60) avec la surface intérieure (56), laquelle ellipse (62) correspond à l'ouverture d'introduction de lumière (20).
